# EUROPEAN PATENT SPECIFICATION

(11) **EP 0 962 153 B1**
(45) Date of publication and mention of the grant of the patent: **27.08.2003**
(21) Application number: 99201731.9
(22) Date of filing: 02.06.1999
(51) Int. Cl.: A23N 15/01

(54) **Machine for harvesting a Brussels sprout plant**
Vorrichtung für die Ernte von Rosenkohl
Machine pour la récolte des choux de Bruxelles

(30) Priority: 02.06.1998 NL 1009299
(43) Date of publication of application: 08.12.1999
(73) Proprietor: Tumoba B.V., 2991 VC Barendrecht (NL)
(72) Inventor: Molenaar, Hendrik Willem, 2992 HN Barendrecht (NL)
(74) Representative: Reynvaan, Lambertus Johannes

(56) References cited:
- EP-A- 0 501 544
- NL-A- 7 611 586
- US-A- 3 428 048

## Description

The invention relates to a machine for harvesting a Brussels sprout plant comprising a cutting element for cutting off the stalk of the plant just above the ground and a processing element having a feed aperture and a picking head for removing the sprouts from said stalk.

A machine for harvesting Brussels sprouts of this type is known from NL 7611586. In this machine the stalk of the Brussels sprout plant is cut off close to the ground, after which said stalk is gripped by an operative and fed horizontally, cut end first, into the feed aperture of the processing element.

It will be clear that feeding in the stalks by hand is hard and unpleasant work, which also has to be carried out at a cold time of year. The actions to be performed are complicated, since the cut off stalk has to be lifted up, turned to the horizontal position and then guided with the cut off end accurately into the feed aperture. This combined with the irregular shape of the stalks, is probably the reason why no devices by means of which the cut-off stalks can be fed automatically into the processing element have been known until now.

The object of the invention then is to provide a machine for harvesting a sprout plant by means of which a cut-off stalk can be gripped efficiently and reliably for further processing.

This object is achieved according to the invention by means of a machine which has the features specified in claim 1. After being cut of by the cutting element of the harvesting machine, the stalk of the Brussels sprout plant is seized by the two grippers of the arm, one gripper gripping the stalk close to the cut-off end, and the stalk can be moved for further processing by moving the arm.

According to claim 2 the stalk is accurately guided in line with the axis of the feed aperture by grippers on the arm, is taken over by the feed element and is then guided into the feed aperture of the processing element. During the infeed, the arm moves back again to the initial position in order to pick up the next stalk. In this way the infeed of the stalk occurs in two successive steps, slightly overlapping each other, so that the speed of the cycle is increased.

According to the invention the grippers, which grip the stalk close to its cut-off end have sharp cutting edges on the sides of the jaws facing each other. This means that these jaws cut slightly into the softer parts of the stalk, in which case any side stems or leaves are severed, so that the grippers centre themselves around the harder core of the stalk, and correct positioning of the stalk in the gripper is always ensured. This is very important for the cut-off end of the stalk, in order to guide it accurately into the feed aperture of the processing element.

Other functional details and further developments of the invention emerge from claims 5-9.

The invention is explained in greater detail with reference to the appended drawing, which illustrates a preferred embodiment of the device according to the invention, in which:
- Figure 1: is a diagrammatic side view of the device according to the invention, which is fitted on a partially illustrated harvesting machine for Brussels sprouts;
- Figure 2: is a section along the line II-II in Figure 1;
- Figure 3a: is a section along the line III-III in Figure 1, with the gripper in the closed position for feeding in the stalk; and
- Figure 3b: is a section along the line III-III in Figure 1, with the gripper in the open, returning position.

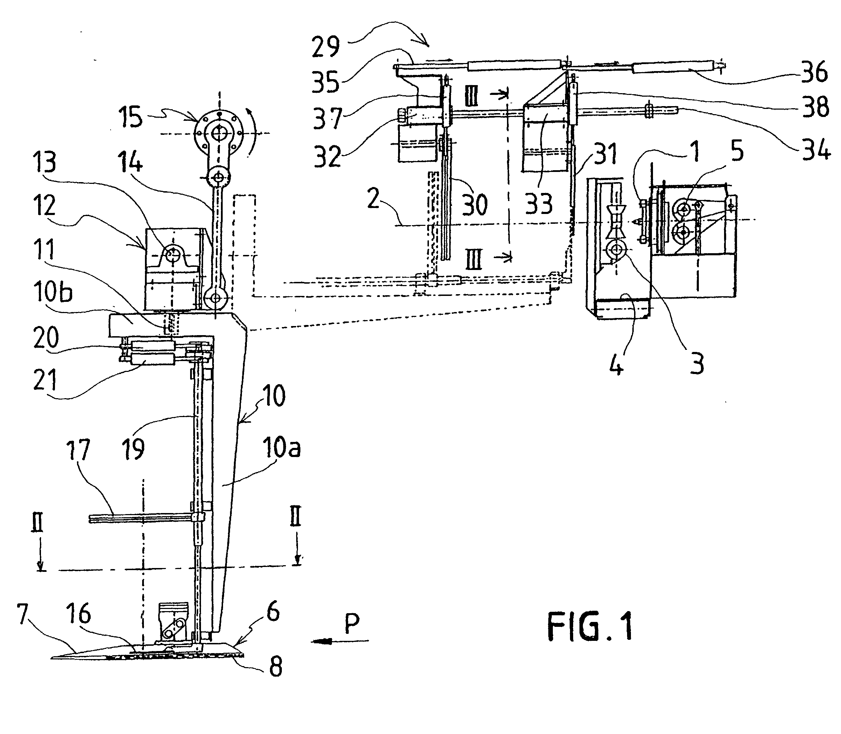

Figure 1 shows the device according to the invention for use in the case of a harvesting machine for Brussels sprouts, which harvesting machine is only partially shown. The harvesting machine for Brussels sprouts comprises a picking head 1, which is known per se and has a number of rotating cutters which bound a feed aperture having a horizontal central axis 2. A number of defoliation rollers 3 are fitted around the above mentioned axis 2 at some distance in front of the picking head, which rollers bound a throughput aperture for the stalk which is significantly larger than the feed aperture of the picking head. A conveyor belt 4, which removes the Brussels sprouts cut off by the picking head, is provided below the picking head. Throughput means 5 are also present behind the picking head, which throughput means pull the stalk fed into the picking head further through the latter. Another visible part of the harvesting machine for Brussels sprouts is a cutting element 6, formed by a shoe 7 which is situated near the ground and in which a circular saw 8 is present for cutting off the stalk. The harvesting machine described so far is conventional and moves to the left in the drawing, in the direction of travel indicated by the arrow P.

The device according to the invention is added to this conventional harvesting machine, in order to feed the cut-off Brussels sprout stalks into the feed aperture of the picking head, an activity which until now was carried out manually by an operative.

The device according to the invention is composed substantially of two parts, each carrying out one step of the two-step operation. The first step consists of gripping the stalk cut off by the cutting element 6 of the harvesting machine, and the alignment of said stalk with the axis of the feed aperture of the picking head. The second step consists of accurately guiding the stalk into the feed aperture.

The part of the device according to the invention for carrying out the first step is composed of a two-legged arm 10, which has a long leg 10a and a short leg 10b situated perpendicular thereto. The short leg 10b is immovably connected to a shaft 11, which runs parallel to the long leg 10a and is rotatably mounted in a housing 12. By means of the shaft 11, the arm 10 is thus rotatably attached to the housing 12. The housing 12 itself is mounted in such a way that it can tilt about a fixed shaft 13, which is situated perpendicular to the rotary shaft 11 and in Figure 1 perpendicular to the plane of drawing. A bevel gear transmission (not shown in any further detail) is provided between the fixed shaft 13 and the rotary shaft 11, said gear transmission having such a transmission ratio, that when the housing is tilted through 90° relative to the fixed shaft 13, the shaft 11, and thus the arm 10, is rotated through 180°. The tilting of the housing 12 about the fixed shaft 13 is achieved by means of a rod 14, which on one side is hinged to the housing 12 and on the other side is hinged to a crank mechanism 15. The entire construction is made in such a way that when the crank mechanism 15 is rotated anticlockwise through 180°, the housing 12 tilts through 90° in the plane of drawing and takes the arm 10 with it. At the same time, the shaft 11, and consequently the entire arm 10, is rotated through 180° by way of the bevel gear transmission. The arm 10 then assumes the position indicated by dashed lines in Figure 1.

Figure 1 shows the arm 10 in the initial position for carrying out the cycle of the first step, i.e. the long leg 10a is in a vertical position and ends near the shoe 7 of the cutting element 6. Two grippers are provided along the long leg, on the front side of said leg, viewed in the direction of travel P, namely a first, bottom gripper 16, which is situated near the free end of the long leg 10a directly above the circular saw 8, and a second gripper 17, which is situated some distance above the bottom gripper along the long leg. The two grippers are fixed to operating rods 18, 19, which are provided along the long leg 10a, and which are rotated by means of piston-cylinder units 20, 21, with the aid of which the grippers are operated in order to open and close said grippers.

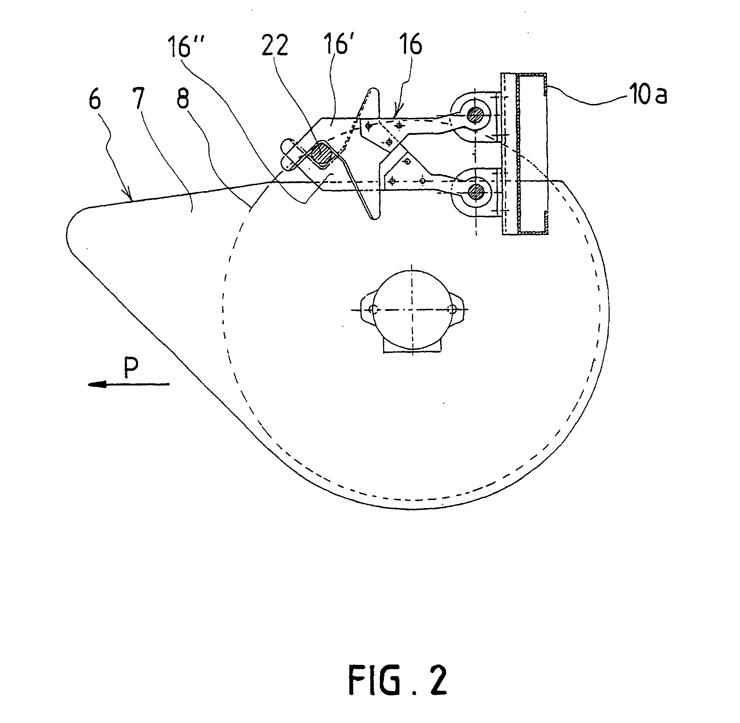

Figure 2 shows the bottom gripper in its closed position. A stalk 22 is also clamped in this gripper, which stalk was cut off by the circular saw 8 a short time beforehand. As can be seen in this figure, the gripper 16 has cutter-like jaws, i.e. the sides 16' of the jaws which face each other are designed with sharp cutting edges. This has the advantage that said cutting edges penetrate into the relatively softer parts of the stalk during closure of the gripper, any side stems, leaves or other soft parts being severed. In this way the gripper centres itself around the relatively harder core of the stalk, so that clear positioning of the stalk in the gripper 16 is ensured, which positioning is of great importance during further processing of the above mentioned stalk.

The other gripper, situated some distance above the bottom gripper, is a different shape and clamps the stalk by, as it were, clasping it without penetrating into it.

As described above, the stalk cut off by the circular saw 8 is seized by the two grippers 16, 17, after which the arm 10 is tilted by means of the crank mechanism 15 and rotated into the position indicated by dashed lines, the long leg 10a running horizontally and the axis of the clamped stalk substantially coinciding with the axis 2 of the feed aperture of the picking head 1. In this position, the stalk is taken over by the second part of the device described below, in order to carry out the second step of the operation.

The second part of the device according to the invention for carrying out the second step is formed by a feed element, indicated in its entirety by the reference numeral 29, which comprises two grippers 30, 31, each fixed by means of a slide 32, 33 on a horizontal guide bar 34. Each slide is in turn connected to a piston-cylinder unit 35, 36, by means of which the slides, and thus the grippers, can be moved along the guide bar 34. The two piston-cylinder units 35 and 36 are connected to each other in series, so that the two grippers can move together from the initial position towards the feed aperture. In addition, each slide is further provided with a piston-cylinder unit 37, 38 for opening and closing the respective grippers.

In Figure 1 the two grippers 30, 31 are shown in the initial position, in which the stalk is taken over from the grippers 16, 17 of the arm 10. In this case the gripper 30 is situated immediately to the right of and next to the gripper 17 of the arm, while the gripper 31 is situated immediately to the right of and next to the gripper 16 of the arm. The grippers 30 and 17 are of the same type, i.e. they grip around the stalk. The grippers 16 and 31 are likewise of the same type, i.e. their jaws have sharp cutting edges, which penetrate into the relatively softer parts of the stalk, for correct positioning of the stalk in the gripper. As soon as the grippers 30 and 31 have taken over the stalk, the arm 10 returns to the initial position in order to pick up the next stalk by means of the grippers 16 and 17.

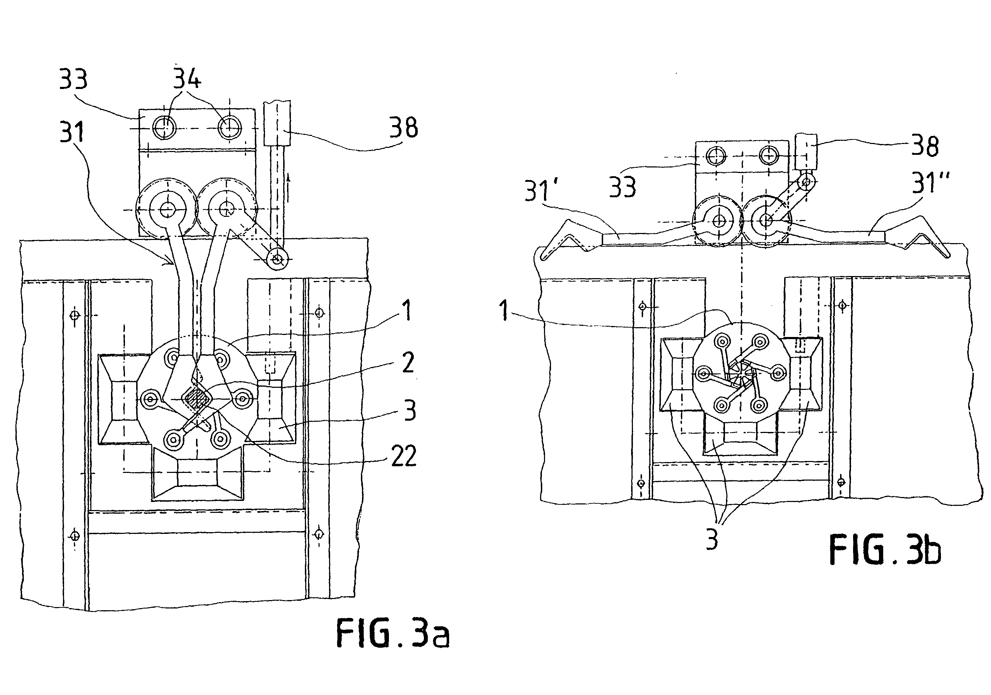

The way in which the stalk is fed into the picking head will now be described with reference to Figures 3a and 3b. Figure 3a shows the picking head 1 with the defoliation rollers 3 present in front of it. The gripper 31 in this case is in the closed position, in which a stalk 22 is clamped. Said gripper likewise has sharp cutting edges 31', in order to position the stalk accurately relative to it.

In this figure it can be seen clearly that an aperture for allowing through the closed gripper is left clear between the defoliation rollers. In other words, the top defoliation roller is left out here, in order to make it possible for the gripper 31 to go within a few millimetres of the picking head, so that the stalk can be guided reliably into the feed aperture. From the position shown in Figure 1, in which the stalk has been taken over from the grippers 16 and 17, the two grippers 30 and 31 move together to the right, in such a way that the gripper 31 passes the defoliation rollers 3, until the gripper 31 guides the cut-off end of the stalk into the feed aperture of the picking head. At this moment the gripper 31 lets go, while the gripper 30 presses the stalk further into the picking head until the stalk is pulled further through the picking head by the throughput means 5. When the gripper 31 lets go, it spreads out fully, so that the arms of the gripper are situated substantially in line with each other. This position is shown in Figure 3b. When the gripper 31 has fed the cut-off end of the stalk into the feed aperture, said gripper cannot move back along the same path, because the stalk which has not yet been fully put through impedes the return trip. By spreading the gripper 31 so far, it is ensured that said gripper can move back to the initial position over the defoliation rollers. The two grippers can consequently move back together to the initial position without having to wait until the stalk has been fed fully into the picking head by the throughput means 5. The cycle time of this second step is shortened in this way.

The device is also provided in the usual manner with the necessary hydraulic, pneumatic or electric operating and/or control devices, which need not be described any further here.

An important characteristic of the device according to the invention is that the stalk is gripped near the cut-off end immediately after it has been cut off and is positioned accurately relative to said gripper. This makes it possible to feed said cut-off end accurately and reliably into the feed aperture of the picking head, irrespective of the further shape or size of the stalk.

It will also be clear that the invention is not restricted to the device illustrated and described here, but that for the person skilled in the art a large number of variants and modifications are possible within the scope of the appended claims, depending on the nature of the stalks to be processed and the harvesting machine used.

## Claims

1. Machine for harvesting a Brussels sprout plant, comprising a cutting element (8) for cutting off the stalk of the plant just above the ground as well as a processing element (1) having a feed aperture and a picking head for removing the sprouts from said stalk,
**characterised in that** the machine is provided with a device for gripping the cut- off stalk of the plant for further processing, said device comprising:
- a movable arm (10) which is provided with a number of grippers (16, 17) situated at a distance from each other;
- a drive mechanism (12, 13, 14, 15) which can move the arm with the grippers from a substantially vertical initial position to a delivery position for delivering the stalk for further processing, the gripper (16) which is the bottom one when the arm is in the initial position being situated a short distance above the cutting element (6) when the arm is in this position and being able to grip the stalk near the cut-off end.

2. Machine according to claim 1, **characterised in that** the grippers of the arm (10) in the delivery position thereof are situated substantially on the axis (2) of the feed aperture of the processing element (1), and **in that** a feed element (29) comprising a number of grippers (30, 31) is present, which grippers are situated some distance from each other on the above mentioned axis of the feed aperture and can be moved along said axis from an initial position, in which said grippers can take over the stalk from the grippers on the above mentioned arm (10), to the processing element and back again to the initial position, the gripper (31) of the feed element situated closest to the processing element in the initial position of said gripper being adjacent to the bottom gripper (16) of the arm when said arm is in the above mentioned delivery position.

3. Machine according to claim 2, **characterised in that** the bottom gripper (16) of the arm and the front gripper (31) of the feed element interacting therewith are provided with means for positioning the stalk accurately relative to said grippers.

4. Machine according to claim 3, **characterised in that** the means for positioning the stalk relative to the grippers are formed by sharp cutting edges (16', 31') on sides of the jaws of the two grippers (16, 31) facing each other, which cutting edges can penetrate into the softer material of the stalk.

5. Machine according to the preceding claims 1-4, **characterised in that** the arm comprises two grippers (16, 17) and the feed element comprises two grippers (30, 31) interacting therewith, the top gripper (17) of the arm and the rear gripper (30) of the feed element being in the form of braces which clasp the stalk.

6. Machine according to claim 5, **characterised in that** the grippers of the feed element (29) move together from the initial position to the processing element until the cut-off end of the stalk has been guided into the feed aperture, after which the front gripper (31) opens, while the rear gripper presses the stalk further into the feed aperture of the processing element, after which the two grippers of the feed element return together to the initial position.

7. Machine according to one or more of the preceding claims 1-6, **characterised in that** the drive mechanism of the arm comprises a housing (12) which can be tilted by means of a lever mechanism (14, 15) about a fixed shaft (13), in which housing a shaft (11), immovably connected to the arm (10) and running in the longitudinal direction of the arm, is rotatably mounted, which shaft (11) is perpendicular to the above mentioned fixed shaft (13), a bevel gear transmission being present in the housing between the fixed shaft and the rotary shaft, so that when the housing is tilted the shaft (11) performs a certain rotation.

8. Machine according to claim 7, **characterised in that** the bevel gear transmission in the housing (12) has such a transmission ratio that when the housing (12) - and thus the arm - tilts, the arm also performs a rotation of 180° about its longitudinal direction.

9. Machine according to one or more of the preceding claims 2-8, in which a number of defoliation rollers (3) being provided at some distance in front of the picking head, which defoliation rollers surround a throughput aperture which is clearly larger than the feed aperture of the picking head, and the picking head is provided with means situated behind the feed aperture for pulling the fed-in stalk further through the picking head, **characterised in that** an aperture for allowing through the front gripper (31) of the feed element (29) is left clear between the defoliation rollers (3) when it guides the stalk to the feed aperture of the picking head, which gripper in the opened state is spread so far that it can move back past said defoliation rollers to the initial position.

## Patentansprüche

1. Maschine zum Ernten von Rosenkohl mit einem Schneidelement (8) zum Abschneiden der Pflanze direkt oberhalb des Bodens sowie einem Verarbeitungselement (1), das eine Zuführöffnung und einen Pflückkopf zum Entfernen der Sprößlinge von dem Stengel aufweist,
**dadurch gekennzeichnet, daß** die Maschine eine Vorrichtung zum Greifen des abgeschnittenen Stengels der Pflanze zum Weiterverarbeiten umfaßt, wobei die Vorrichtung aufweist:
- einen bewegbaren Arm (10), der mehrere Greifelemente (16, 17) umfaßt, die von einander beabstandet angeordnet sind;
- einen Antriebsmechanismus (12, 13, 14, 15), der den Arm zusammen mit den Greifelementen aus einer im wesentlichen vertikalen Ausgangsstellung in eine Förderstellung bewegen kann, um den Stengel zur Weiterverarbeitung zu transportieren, wobei das Greifelement (16), bei dem es sich um das untere Greifelement handelt, wenn sich der Arm in seiner Ausgangsstellung befindet, in einem geringen Abstand oberhalb des Schneidelementes (6) positioniert ist, wenn sich der Arm in dieser Stellung befindet, und den Stengel nahe seines abgeschnittenen Endes halten kann.

2. Maschine nach Anspruch 1, **dadurch gekennzeichnet, daß** die Greifelemente des Arms (10) in dessen Förderstellung im wesentlichen entlang einer gemeinsamen Achse (2) der Förderöffnung des Verarbeitungselementes (1) angeordnet sind, und daß ein Förderelement (29), das mehrere Greifelemente (30, 31) aufweist, vorgesehen ist, wobei die Greifelemente entlang der Achse der Förderöffnung voneinander beabstandet angeordnet sind und entlang der Achse aus einer Ausgangsstellung, in der die Greifelemente den Stengel von den Greifelementen des Arms (10) übernehmen, in die Verarbeitungsstellung und zurück in die Ausgangsstellung bewegbar sind, und dasjenige Greifelement (31) des Förderelementes, das in der Ausgangsstellung des Greifelementes am nächsten an dem Verarbeitungselement angeordnet ist, neben dem unteren Greifelement (16) des Arms positioniert ist, wenn sich der Arm in der Förderstellung befindet.

3. Maschine nach Anspruch 2, **dadurch gekennzeichnet, daß** das untere Greifelement (16) des Arms und das vordere Greifelement (31) des Zuführelementes, das mit diesem zusammenwirkt, Mittel zum ordnungsgemäßen Positionieren des Stengels relativ zu den Greifele-, menten umfassen.

4. Maschine nach Anspruch 3, **dadurch gekennzeichnet, daß** die Mittel zum Positionieren des Stengels relativ zu den Greifelementen scharfe Schneidkanten (16', 31') an den Seiten der Krallen der beiden zueinander weisenden Greifelemente (16, 31) aufweisen, wobei die Schneidkanten das weichere Material des Stengels durchdringen können.

5. Maschine nach einem der Ansprüche 1 bis 4, **dadurch gekennzeichnet, daß** der Arm zwei Greifelemente (16, 17) aufweist und das Förderelement zwei Greifelemente (30, 31) umfaßt, die mit diesen zusammenwirken, wobei das obere Greifelement (17) des Arms und das untere Greifelement (30) des Förderelementes die Form von Klammern aufweisen, die den Stengel umfassen.

6. Maschine nach Anspruch 5, **dadurch gekennzeichnet, daß** sich die Greifelemente des Förderelementes (29) zusammen aus einer Ausgangsstellung zu dem Verarbeitungselement bewegen, bis das abgeschnittene Ende des Stengels in die Förderöffnung geführt ist, woraufhin sich das vordere Greifelement (31) öffnet, während das hintere Greifelement den Stengel weiter in die Förderöffnung des Verarbeitungselementes drückt, und sich die beiden Greifelemente des Förderelementes anschließend zurück in die Ausgangsstellung bewegen.

7. Maschine nach einem oder mehreren der Ansprüche 1 bis 6, **dadurch gekennzeichnet, daß** der Antriebsmechanismus des Arms ein Gehäuse (12) umfaßt, das mit Hilfe eines Hebelmechanismus (14, 15) um einen feststehenden Schaft (13) gedreht werden kann, wobei in dem Gehäuse eine Welle (11) drehbar befestigt ist, die starr mit dem Arm (10) verbunden ist und sich in Längsrichtung des Arms sowie senkrecht zu dem feststehenden Schaft (13) erstreckt, und in dem Gehäuse ein Kegelradgetriebe zwischen dem feststehenden Schaft und der drehbaren Welle in dem Gehäuse angeordnet ist, so daß die Welle (11) eine bestimmte Drehbewegung ausführt, wenn das Gehäuse geschwenkt wird.

8. Maschine nach Anspruch 7, **dadurch gekennzeichnet, daß** das in dem Gehäuse (12) angeordnete Kegelradgetriebe ein derartiges Übersetzungsverhältnis aufweist, daß, wenn das Gehäuse (12) - und somit der Arm - geschwenkt wird, auch der Arm eine Drehung um 180° um seine Längserstreckung ausführt.

9. Maschine nach einem oder mehreren der Ansprüche 2 bis 8, bei der mehrere Abblattwalzen (3) in einem Abstand vor dem Pflückkopf angeordnet sind, wobei die Abblattwalzen eine Durchsatzöffnung umgeben, die deutlich größer als die Förderöffnung des Pflückkopfes ist, und der Pflückkopf Mittel umfaßt, die hinter der Förderöffnung angeordnet sind, um den zuge-, führten Stengel weiter durch den Pflückkopf zu ziehen, **dadurch gekennzeichnet, daß** zwischen den Abblattwalzen (3) eine Öffnung zum Durchlassen des vorderen Greifelementes (31) des Förderelementes (29) verbleibt, wenn das Greifelement den Stengel zu der Öffnung des Pflückkopfes führt, wobei das Greifelement in seinem geöffneten Zustand so weit gespreizt wird, daß es sich vorbei an den Abblattwalzen in die Ausgangsstellung bewegen kann.

## Revendications

1. Machine pour la récolte de choux de Bruxelles, comprenant un élément de coupe (8), pour couper la tige de la plante juste au-dessus du sol, et un élément de traitement (1) comportant une ouverture d'alimentation et une tête de cueillette pour enlever les choux de la dite tige,
**caractérisée en ce que** la machine est pourvue d'un dispositif de prise de la tige coupée de la plante pour la suite du traitement, le dit dispositif comprenant :
un bras mobile (10) qui comporte un certain nombre de pinces (16, 17) situées à distance les unes des autres ;
un mécanisme d'entraînement (12, 13, 14, 15) qui peut déplacer le bras portant les pinces, d'une position initiale sensiblement verticale à une position de distribution pour envoyer la tige à la suite du traitement, la pince (16) qui est la plus basse lorsque le bras est dans la position initiale étant située à une faible distance au-dessus de l'élément de coupe (6) lorsque le bras est dans cette position, et pouvant saisir la tige près de l'extrémité coupée.

2. Machine selon la revendication 1, **caractérisée en ce que** les pinces du bras (10) dans sa position de distribution sont situées sensiblement sur l'axe (2) de l'ouverture d'alimentation de l'élément de traitement (1), et **en ce qu'**un élément d'alimentation (29) comprenant un certain nombre de pinces (30, 31) est présent, ces pinces étant situées à une certaine distance les unes des autres sur l'axe précité de l'ouverture d'alimentation et pouvant être déplacées le long de cet axe à partir d'une position initiale, dans laquelle les dites pinces peuvent prendre la tige à partir des pinces du bras précité (10), jusqu'à l'élément de traitement et retour à la position initiale, la pince (31) de l'élément d'alimentation située la plus près de l'élément de traitement dans la position initiale de la dite pince étant adjacente à la pince inférieure (16) du bras lorsque le dit bras est dans la position de distribution précitée.

3. Machine selon la revendication 2, **caractérisée en ce que** la pince inférieure (16) du bras et la pince avant (31) de l'élément d'alimentation qui coopère avec elle comportent des moyens de positionnement de la tige exactement par rapport aux dites pinces.

4. Machine selon la revendication 3, **caractérisée en ce que** les moyens de positionnement de la tige par rapport aux pinces sont formés par des bords de coupe vifs (16', 31') sur les côtés des mâchoires des deux pinces (16, 31) en face l'un de l'autre, ces bords de coupe pouvant pénétrer dans la matière plus tendre de la tige.

5. Machine selon une quelconque des revendications précédentes 1 à 4, **caractérisée en ce que** le bras comprend deux pinces (16, 17) et l'élément d'alimentation comprend deux pinces (30, 31) qui coopèrent avec les précédentes, la pince supérieure (17) du bras et la pince arrière (30) de l'élément d'alimentation étant sous la forme de demi-colliers qui enserrent la tige.

6. Machine selon la revendication 5, **caractérisée en ce que** les pinces de l'élément d'alimentation (29) se déplacent ensemble de la position initiale vers l'élément de traitement jusqu'à ce que l'extrémité coupée de la tige ait été guidée dans l'ouverture d'alimentation, après quoi la pince avant (31) s'ouvre tandis que la pince arrière presse la tige plus loin dans l'ouverture d'alimentation de l'élément de traitement, après quoi les deux pinces de l'élément d'alimentation reviennent ensemble à la position initiale.

7. Machine selon une ou plusieurs des revendications précédentes 1 à 6, **caractérisée en ce que** le mécanisme d'entraînement du bras comprend un carter (12) qui peut être basculé au moyen d'un mécanisme à levier (14, 15) autour d'un arbre fixe (13), un arbre (11) est monté de façon tournante dans le dit carter et il est relié de façon fixe au bras (10) et s'étend dans la direction longitudinale du bras, le dit arbre (11) est perpendiculaire à l'arbre fixe précité (13), une transmission à engrenages coniques étant présente dans le carter entre l'arbre fixe et l'arbre rotatif de sorte que, lorsque le carter est basculé, l'arbre (11) effectue une certaine rotation.

8. Machine selon la revendication 7, **caractérisée en ce que** la transmission à engrenages coniques dans le carter (12) a un rapport de transmission tel que, lorsque le carter (12), et donc le bras, est basculé, le bras effectue également une rotation de 180 degrés autour de sa direction longitudinale.

9. Machine selon une ou plusieurs des revendications précédentes 2 à 8, dans lequelle un certain nombre de rouleaux de défoliation (3) sont prévus à une certaine distance à l'avant de la tête de cueillette, ces rouleaux de défoliation entourent une ouverture de distribution qui est nettement plus grande que l'ouverture d'alimentation de la tête de cueillette, et la tête de cueillette comporte des moyens situés derrière l'ouverture d'alimentation pour tirer la tige introduite plus loin à travers la tête de cueillette, **caractérisée en ce qu'**une ouverture pour permettre le passage de la pince avant (31) de l'élément d'alimentation (29) est dégagée entre les rouleaux de défoliation (3) lorsque cette pince guide la tige vers l'ouverture d'alimentation de la tête de cueillette, cette pince dans l'état ouvert étant suffisamment écartée pour qu'elle puisse revenir en arrière au-delà des dits rouleaux de défoliation jusqu'à la position initiale.
